# EUROPÄISCHE PATENTSCHRIFT

(11) **EP 3 432 266 B1**
(45) Veröffentlichungstag und Bekanntmachung des Hinweises auf die Patenterteilung: **16.11.2022**
(21) Anmeldenummer: 18183486.2
(22) Anmeldetag: 13.07.2018
(51) Int. Cl.: G06T 7/00, G06T 7/521, B29C 70/00

(54) **VERFAHREN UND VORRICHTUNG ZUM ERKENNEN VON FEHLSTELLEN**
DEVICE AND METHOD FOR DETECTING FAULTY PARTS
PROCÉDÉ ET DISPOSITIF DE DÉTECTION DE DÉFAUTS

(30) Priorität: 17.07.2017 DE 102017116036
(43) Veröffentlichungstag der Anmeldung: 23.01.2019
(73) Patentinhaber: Deutsches Zentrum für Luft- und Raumfahrt e.V., 51147 Köln (DE)
(72) Erfinder: Meister, Sebastian, 21680 Stade (DE); Krombholz, Christian, 21614 Buxtehude (DE)
(74) Vertreter: Gramm, Lins & Partner Patent- und Rechtsanwälte PartGmbB

(56) Entgegenhaltungen:
- DE-A1-102013 104 546
- SARA SHARIFZADEH ET AL: "Robust Surface Abnormality Detection for a Robotic Inspection System", IFAC-PAPERSONLINE, Bd. 49, Nr. 21, 5. September 2016 (2016-09-05), Seiten 301-308, XP055528693, ISSN: 2405-8963, DOI: 10.1016/j.ifacol.2016.10.572
- H Apmann ET AL: "Verfahren der INLINE-Qualitätssicherung und der zerstörungsfreien Prüfung innerhalb der Fertigungslinie von Faser-Metall-Laminaten", Deutscher Luft- und Raumfahrtkongress 5-7.Sept. 2017, 5. September 2017 (2017-09-05), Seiten 1-8, XP055528659, Gefunden im Internet: URL:https://www.dglr.de/publikationen/2017 /450329.pdf [gefunden am 2018-11-29]

## Beschreibung

Die Erfindung betrifft ein Verfahren zum Erkennen von Fehlstellen von auf einem Werkzeug abgelegtem Fasermaterial eines Faserverbundwerkstoffes zur Herstellung eines Faserverbundbauteils. Die Erfindung betrifft ebenso eine Vorrichtung zum Erkennen solcher Fehlstellen sowie eine Faserlegevorrichtung mit einer derartigen Vorrichtung zum Erkennen von Fehlstellen.

Aufgrund der besonderen Eigenschaft, bei einem relativ geringen spezifischen Gewicht eine besonders hohe Festigkeit und Steifigkeit aufzuweisen finden Faserverbundwerkstoffe mittlerweile in vielen Bereichen Anwendung. Nicht selten werden dabei auch sicherheitskritische, große Bauteile, wie beispielsweise Flügelschalen oder lasttragende Elemente aus einem Faserverbundwerkstoff hergestellt. Nachteilig von Faserverbundbauteilen sind jedoch die hohen Herstellungskosten, die in dem oft schlecht zu automatisierenden Herstellungsprozess begründet liegen.

Gerade in der Luft- und Raumfahrt sowie im Automobilbereich besteht jedoch die Bestrebung, möglichst viele Bauelemente aus einem Faserverbundwerkstoff in derselben Produktion herstellen zu können, um so die Stückkosten zu reduzieren, damit Faserverbundbauelemente in komplexen Bauteilen oder Gütern, die in hohen Stückzahlen gefertigt werden, zu etablieren. Aber auch bei großen Bauelementen, wie beispielsweise Flügelschalen von Flugzeugen oder Rotorblättern von Windkraftanlagen, ist ein automatisierter Herstellungsprozess wünschenswert, da derartige Großbauteile sehr hohe personelle Kosten verursachen, wenn der Herstellungsprozess, insbesondere das Ablegen der Fasern, händisch erfolgt.

So ist beispielsweise aus der DE 10 2010 015 027 A1 eine Faser-Legevorrichtung bekannt, bei der auf einem umlaufenden Schienensystem Roboter geführt werden, die jeweils einen Ablegekopf haben, mit dem Faserhalbzeuge auf einem in der Mitte des umlaufenden Schienensystems vorgesehenen Werkzeug abgelegt werden können. Durch diese Form des Ablegens von Faserhalbzeugen mithilfe von Robotern kann der Legeprozess zur Bildung der herzustellenden Bauteilform automatisiert werden, was insbesondere die Herstellung großer Bauelemente begünstigt.

Mit den zunehmenden Versuchen der Automatisierung solcher Ablegeprozesse rückt jedoch der Aspekt der Qualitätssicherung mehr und mehr in den Fokus, insbesondere dann, wenn sicherheitskritische Bauelemente aus einem Faserverbundwerkstoff in einem automatisierten Herstellungsprozess hergestellt werden sollen. Die durch die Automatisierung der Prozesse erfolgten Einsparungen werden dann meist durch eine höhere Qualitätssicherung, insbesondere am fertigen Bauteil, sowie einer höheren Ausschussrate zunichte gemacht.

So sind beispielsweise aus der DE 10 2013 104 545 A1, DE 10 2013 104 546 A1 und DE 10 2013 112 260 A1 Verfahren und Vorrichtungen zum Erkennen von Fehlstellen von abgelegten Faserhalbzeugen bekannt, bei denen mithilfe eines Laserlichtschnittsensors ein Tiefenbild der Faserhalbzeugoberfläche der abgelegten Faserhalbzeuge erfasst und aus diesem Tiefenbild dann Fehlstellen erkannt werden. Da die Auswertung eines Tiefenbildes, insbesondere bei sehr großen Bauteilen, sehr rechenintensiv ist und eine Echtzeitfähigkeit der Erkennung von Fehlstellen wünschenswert ist, werden für eine Vorab-Analyse andere Erkennungssysteme vorgeschaltet, wie beispielsweise die Erfassung des Bauteils mithilfe von Thermokameras. Allerdings machen diese Zusatzsysteme den Gesamtprozess komplexer und teurer.

Aus Sharifzadeh, S. et. AI: "Robust Surface Abnormality Detection for a Robotic Inspection System", IFAC-PAPERSONLINE, Bd. 49, Nr. 21, 5. September 2016, Seiten 301-308 ist ein Verfahren zum Erkennen von Fehlstellen einer Aluminiumoberfläche bekannt, bei dem die gesamte Oberfläche mithilfe eines Laserscanners gescannt, dann potentielle Fehlerbereiche ermittelt und anschließend Fehlstellen mithilfe eines Klassifizierungsalgorithmus erkannt werden.

Vor diesem Hintergrund ist es Aufgabe der vorliegenden Erfindung ein verbessertes Verfahren zum Erkennen von Fehlstellen und eine verbesserte Vorrichtung hierzu anzugeben, mit denen Fehlstellen sicher und schnell erkannt werden können und somit grundsätzlich echtzeitfähig sind.

Die Aufgabe wird mit dem Verfahren gemäß Anspruch 1 der Vorrichtung gemäß Anspruch 13 sowie der Anlage gemäß Anspruch 14 erfindungsgemäß gelöst.

Gemäß Anspruch 1 wird ein Verfahren zum Erkennen von Fehlstellen von auf einem Werkzeug abgelegtem Fasermaterial eines Faserverbundwerkstoffes zur Herstellung eines Faserverbundbauteils vorgeschlagen, wobei ein Höhenprofil von einer Fasermaterialoberfläche eines auf dem Werkzeug abgelegten Fasermaterials mittels einer Höhenprofilermittlungsvorrichtung ermittelt und das ermittelte Höhenprofil als digitaler Datensatz bzw. Datenbasis in einem elektronischen Datenspeicher abgelegt wird. Anschließend werden eine oder mehrere Fehlstellen in dem abgelegten Fasermaterial ermittelt, indem unter anderem das ermittelte Höhenprofil durch eine Auswerteeinheit entsprechend analysiert wird.

Erfindungsgemäß ist nun vorgesehen, dass mithilfe der Auswerteeinheit, die als elektronische Recheneinheit entsprechend eingerichtet ist, das Höhenprofil in eine Mehrzahl von Teilbereichen bzw. Gitterzellen unterteilt wird, die entsprechend den Teilbereichen bzw. Gitterzellen auf der Fasermaterialoberfläche des abgelegten Fasermaterials entsprechen. Demzufolge wird die gesamte Fasermaterialoberfläche, deren Höhenniveau durch das Höhenprofil repräsentiert wird, beispielsweise mithilfe einer Gitterstruktur, in einzelne Teilbereiche unterteilt, so dass der gesamte digitale Datensatz des Höhenprofils auch als eine Mehrzahl von Teildatensätzen aufgefasst werden kann, die jeweils einen Teilbereich des Höhenprofils bzw. der Fasermaterialoberfläche entsprechen.

Für jeden dieser Teilbereiche wird nun eine statistische Abweichung der Höhenniveaus des den jeweiligen Teilbereich betreffenden Höhenprofils mittels einer statistischen Auswertung ermittelt und dann in Abhängigkeit von der ermittelten statistischen Abweichung der Höhenniveaus festgestellt, ob der betreffende Teilbereich, der gerade untersucht wurde, ein potentieller Fehlerbereich ist, der wenigstens eine potentielle Fehlstelle des abgelegten Fasermaterials hat.

Bei einer solchen statistischen Abweichung kann es sich beispielsweise um eine Abweichung der Höhenniveaus von einem gemittelten Höhenniveau dieses Teilbereiches handeln, so dass darauf geschlossen werden kann, dass möglicherweise ein Fehler vorliegt. Bei einer statistischen Abweichung handelt es sich insbesondere um ein Schätzverfahren, mit dem basierend auf den Höhenniveaus innerhalb des jeweiligen Teilbereiches abgeschätzt werden kann, ob ein potentieller Fehler vorliegt oder nicht. Der Vorteil hierbei liegt darin, dass sehr schnell und effizient basierend auf der schnell auszuführenden statistischen Auswertung festgestellt werden kann, ob ein Teilbereich möglicherweise (d.h. mit einer gewissen Wahrscheinlichkeit) fehlerbehaftet ist oder nicht. Fehlerfreie Teilbereiche werden dann in den weiteren Untersuchungen unberücksichtigt gelassen, wodurch sehr zielgerichtet eine Untersuchung des Höhenprofils hinsichtlich von Fehlstellen durchführbar ist.

Wurde ein potentieller Fehlerbereich aufgefunden, so bedeutet dies zunächst lediglich, dass (mit einer gewissen Wahrscheinlichkeit) anzunehmen ist, dass in dem jeweiligen potentiellen Fehlerbereich wenigstens eine potentielle Fehlstelle des abgelegten Fasermaterials liegt, ohne dass hierüber jedoch Gewissheit besteht. Denn mithilfe der statistischen Auswertung der einzelnen Teilbereiche sollen lediglich jene Teilbereiche herausselektiert und eliminiert werden, bei denen mit sehr hoher Wahrscheinlichkeit bzw. mit Sicherheit anzunehmen ist, dass diese keine Fehlstellen enthalten. Für die weitere, rechenintensivere Überprüfung liegen somit nur einige wenige Teilbereiche vor, bei denen Fehlstellen anzunehmen sind, was in einem weiteren Schritt aber noch überprüft werden muss.

Wurde somit wenigstens ein potentieller Fehlerbereich festgestellt, so wird in einem zweiten Schritt für jeden dieser potentiellen Fehlerbereiche jeweils Eigenschaftsdaten des abgelegten Fasermaterials aus einer hinterlegten Datenbasis ermittelt, wobei die Eigenschaftsdaten ein oder mehrere Eigenschaften des abgelegten Fasermaterials beschreiben. In Abhängigkeit von den für den jeweiligen potentiellen Fehlerbereich ermittelten Eigenschaftsdaten wird eine Fehlstelle erkannt, indem der potentielle Fehlerbereich basierend auf den ermittelten Eigenschaftsdaten mittels der Auswerteeinheit analysiert und untersucht wird.

Die Eigenschaftsdaten, die in der Datenbasis enthalten sind, werden dabei zuvor mittels einer für die jeweilige Eigenschaft geeigneten Sensorik erfasst und in einem digitalen Datenspeicher abgelegt. In einer vorteilhaften Ausführungsform sind die Eigenschaftsdaten die Höhenniveaus des Höhenprofils, das zuvor ermittelt wurde, so dass sowohl für die erste Vorabanalyse als auch für die zweite Analyse auf die gleiche Datenbasis zurückgegriffen wird.

Insbesondere bei sehr großen Bauteilen lässt sich mithilfe des vorliegenden Verfahrens ohne weitere zusätzliche Detektionseinrichtungen sehr schnell erkennen, ob die abgelegte Preform auf dem Werkzeug entsprechende Fehlstellen enthält oder nicht, da in einem ersten Schritt zunächst alle Bereiche eliminiert werden, bei denen mit an Sicherheit grenzender Wahrscheinlichkeit Fehlstellen auszuschließen sind und anschließend in einem zweiten Schritt die übrigen Teilbereiche mithilfe rechenintensiver, aber sehr genauen Untersuchungsverfahren, wie bspw. Mustererkennungsverfahren, untersucht werden, um entsprechende Fehlstellen auf großen Bauteilen detektieren und ggf. die Art des Fehlers kategorisieren zu können.

So ist es beispielsweise denkbar, dass nach Fertigstellung des Ablegeprozesses in einem nachfolgenden Qualitätssicherungsprozess das Bauteil mithilfe der Höhenprofilermittlungsvorrichtung (bspw. eines ausgewählten und zielführenden bildgebenden Sensorsystems) gescannt und anschließend die Fehlstellenerkennung durchgeführt wird. Denkbar ist aber auch, dass der Sensor der Höhenprofilermittlungsvorrichtung in den Ablegekopf einer automatisierten Faserlegeanlage integriert ist und während des Ablegens der Fasermaterialien, die meist als quasiendlose Fasermaterialien bandförmig auf dem Werkzeug abgelegt werden, ein entsprechendes Höhenprofil bereits abgelegter Fasermaterialien erzeugt wird, so dass eine entsprechende Fehlstellenerkennung während des Ablegeprozesses bereits durchgeführt wird und somit die Taktzyklen erhöht werden können.

Des Weiteren ist es dabei vorteilhaft, dass beim Erkennen von entsprechenden Fehlstellen der Prozess unterbrochen werden kann, um entweder die Fehlstelle zu korrigieren oder ggf. das Bauteil auszusondern. Der Faserlegeprozess kann auch unterbrochen werden, um schwerwiegende Folgen zu verhindern, welche ggf. aus speziellen Fehlertypen resultieren können. Es können auch weitere, fehlertypenanhängige Reaktionen des Systems folgen.

Bei der Höhenprofilermittlungsvorrichtung kann es sich beispielsweise um eine Vorrichtung handeln, bei der mithilfe eines optischen Lichtprojektionsverfahrens das Höhenprofil ermittelt wird. Bei einem optischen Lichtprojektionsverfahren wird die Fasermaterialoberfläche mit Licht einer Lichtquelle aus einer ersten Richtung beleuchtet, das von der Fasermaterialoberfläche reflektierte Licht aus einer anderen, zweiten Richtung mit einer Kamera aufgenommen und das Höhenprofil dann in Abhängigkeit von dem reflektierten Licht aus den aufgenommenen Bilddaten durch eine Bildauswerteeinheit berechnet wird.

Durch das Beleuchten der Fasermaterialoberfläche unter einem definierten Winkel und Aufnehmen des reflektierten Lichtes unter einem definierten anderen Winkel können je nach Feinstrukturierung des Beleuchtungslichtes jegliche Profilierungen der Fasermaterialoberfläche der abgelegten Fasermaterialien erfasst werden, so dass sich ein hochgenaues Höhenprofil der Fasermaterialoberfläche der abgelegten Fasermaterialien ergibt. Die Beleuchtung kann dabei mittels abgrenzender Punkte, Linien, Streifen oder sonstiger definierter Hell/Dunkel-Muster erfolgen und ist in der Regel auf einen bestimmten Bereich begrenzt. Vorteilhafterweise handelt es sich beim ausgesendeten Licht um ein Laserlicht, das in Form einer geraden Linie unter einem entsprechenden Winkel auf die Fasermaterialoberfläche projiziert wird, so dass durch die daraus entstehenden Abweichungen von der geraden Linie die Höhenniveaus des Höhenprofils abgeleitet werden können. Sowohl die Beleuchtung der Fasermaterialoberfläche als auch das Aufnehmen des reflektierten Lichtes erfolgt dabei unter einem Winkel, der in Bezug zu der Fasermaterialoberfläche kleiner oder gleich 90° ist. Für Kohlefaser Prepreg Material steht der Laser meist senkrecht auf der Materialoberfläche und die Kamera ist verkippt. Für Glasfaser beispielsweise sind beide in gleichem Winkel gegenüber dem Boden verkippt.

Unter einer Fehlstelle im Sinne der vorliegenden Erfindung wird eine Material- bzw. Faserveränderung verstanden, die beispielsweise zu einem fehlerhaften Aufbau bzw. zu einem fehlerhaften Bauteil führen kann. Derartige Material- bzw. Faserveränderungen können beispielsweise Materialfehler, Faserdurchtrennungen, Materialablösungen oder Materialaufspleißungen sein. Durch die Material- bzw. Faserveränderung von Fasern eines Fasermaterials werden darüber hinaus die mechanischen Eigenschaften des Fasermaterials beeinträchtigt, so dass die gewichtsspezifischen Festigkeiten und Steifigkeiten des späteren Bauteils womöglich nicht mehr realisiert werden können. Fehlstellen im Sinne der vorliegenden Erfindung können darüber hinaus auch Ablegefehler sein, bei denen das Fasermaterial überlappend oder mit einem nicht-tolerierbaren Spalt abgelegt werden. Derartige Sprünge bzw. Stufen innerhalb der Fasermaterialoberfläche der abgelegten Fasermaterialien lassen sich als entsprechende Fehlstellen erkennen und ggf. korrigieren, was die Qualitätssicherung begünstigt. Auch Lufteinschlüsse, Faserondulationen sowie Materialstauchungen können Fehlerstellen im Sinne der vorliegenden Erfindung sein.

Fehlstellen im Sinne der vorliegenden Erfindung können darüber hinaus auch Fremdkörper, wie beispielsweise Folienreste, staub- oder sandkörnige Materialien oder dergleichen sein.

Unter einem Faserverbundwerkstoff im Sinne der vorliegenden Erfindung wird ein mindestens zweiteiliger Werkstoff verstanden, der aus einem Fasermaterial einerseits und aus einem Matrixmaterial andererseits hauptsächlich besteht bzw. hauptsächlich aufweist. Das Fasermaterial, welches auf dem Werkzeug abgelegt wird, kann dabei trockenes Fasermaterial oder vorimprägniertes Fasermaterial sein, wobei durch Aushärten des in das Fasermaterial infundierten Matrixmaterials das spätere Faserverbundbauteil hergestellt wird.

In einer vorteilhaften Ausführungsform wird mittels der Auswerteinheit für jeden potentiellen Fehlerbereich basierend auf den Eigenschaftsdaten des betreffenden potentiellen Fehlerbereiches ein maschinelles Lernverfahren (beispielsweise ein maschinelles Mustererkennungsverfahren) bzgl. der Eigenschaftsdaten innerhalb des betreffenden Fehlerbereiches durchgeführt, um Fehlstellen erkennen zu können. Dabei haben die Erfinder erkannt, dass Fehlstellen in abgelegten Fasermaterialen entsprechende Muster in den Eigenschaftsdaten erzeugen, die sich maschinell erkennen lassen.

So ist es denkbar, dass basierend auf den Höhenniveaus des Höhenprofils als Eigenschaftsdaten eines potentiellen Fehlerbereiches ein maschinelles Lernverfahren bezüglich der Höhenniveaus innerhalb des betreffenden potentiellen Fehlerbereiches zum Erkennen von Fehlermustern, die auf eine Fehlstelle hindeuten, durchgeführt wird, wobei dann eine Fehlstelle in den betreffenden potentiellen Fehlerbereichen in Abhängigkeit von den erkannten Fehlermustern detektiert wird. Jede Fehlstelle, die beim automatisieren Ablegen von Fasermaterial entstehen kann, lässt sich dabei anhand der Höhenniveaus oder einer entsprechenden Repräsentierung hierzu als ein Fehlermuster erkennen, wobei derartige Fehlermuster mithilfe eines maschinellen Lernverfahrens, das rechenintensiv ist, erkannt werden können. Aus den Fehlermustern, die erkannt wurden, lässt sich ggf. mithilfe des maschinellen Lernverfahrens dann ein Fehlertyp ermitteln.

In einer weiteren vorteilhaften Ausführungsform wird vor der Durchführung der Fehlermustererkennung mittels des maschinellen Lernverfahrens ein oder mehrere Fehlstellentypen mithilfe von vorgegebenen Trainingsdaten dem Lernverfahren angelernt, wobei es sich bei dem maschinellen Lernverfahren somit um ein Verfahren aus dem Bereich des maschinellen Lernens handelt. Das maschinelle Lernverfahren wird so auf entsprechende Fehlstellentypen hinsichtlich der Mustererkennung trainiert und kann diese dann so entsprechend aus den potentiellen Fehlerbereichen basierend auf den jeweiligen Eigenschaftsdaten erkennen.

In einer vorteilhaften Ausführungsform handelt es sich bei den Eigenschaftsdaten unter anderem um die Höhenniveaus des Höhenprofils. Denkbare Eigenschaften sind aber auch eine Oberflächenspannung, ein Emissionsgrad bzgl. abgestrahlten Lichtes, ein Transluzenzgrad, eine Druckverteilung, eine Wärmeverteilung, Rauheit, Helligkeit, Farben, Aushärtegrad, Dichte und/oder Kontraste, die mit Hilfe einer entsprechenden Sensorik erkannt und als Eigenschaftsdaten hinterlegt werden. So können bspw. bei der Ermittlung des Höhenprofils basierend auf einem Lichtschnittverfahren unter anderem die Rückstrahlintensität des Lichtes, welches für das Lichtschnittverfahren verwendet wird, die Lichtlinienbreite und/oder eine Wärmeverteilung bzw. Wärmerückstrahlung erfasst und die entsprechenden Eigenschaften hieraus abgeleitet werden (wie bspw. Wärmeverteilung, Kontraste, Rauheit, usw). Die Wärmerückstrahlung kann mittels eines Thermografie-Messsystems, sofern als Ergänzung verwendet, erfasst werden.

In einer vorteilhaften Ausführungsform wird die Position des potentiellen Fehlerbereiches, in dem eine Fehlstelle im zweiten Schritt erkannt wurde, ermittelt und entsprechend ausgegeben, so dass eine erkannte Fehlstelle beispielsweise durch entsprechendes qualitätsgeschultes Personal in Augenschein genommen werden kann. Denkbar ist aber auch, dass die Daten weiterverarbeitet werden, um so beispielsweise automatische Systemreaktionen zu bewirken.

In einer weiteren vorteilhaften Ausführungsform wird das Höhenprofil derart in seine Teilbereiche unterteilt, dass sich angrenzende Teilbereiche überlappen. Hierdurch wird sichergestellt, dass bei Fehlern, die über mehrere Teilbereiche hinweg auftreten, bei der statistischen Auswertung auch entsprechend größere Bereiche abgedeckt werden können und die Teilbereiche somit nicht statisch an ihren jeweiligen angrenzenden Bereichen enden.

In einer weiteren vorteilhaften Ausführungsform wird in Abhängigkeit von dem erkannten Fehlermuster ein Fehlstellentyp mit der Fehlerstelle des abgelegten Fasermaterials ermittelt, so dass nicht nur festgestellt werden kann, ob eine Fehlstelle vorliegt und wo diese sich befindet, sondern dass auch festgestellt werden kann, welche Art von Fehler in dem abgelegten Fasermaterial entstanden ist. Der Fehlertyp bzw. Fehlstellentyp lässt sich dabei bspw. anhand eines Fehlermusters erkennen, da jedes Fehlermuster, das bspw. durch ein maschinelle Mustererkennungsverfahren erkannt wurde, für einen bestimmten Fehlertyp charakteristische Merkmale aufweist, wodurch sich anhand des Fehlermusters der entsprechende Fehlstellentyp klassifizieren lässt.

In einer weiteren vorteilhaften Ausführungsform werden benachbarte potentielle Fehlerbereiche, die anhand der statistischen Auswertung als potentielle Fehlerbereiche identifiziert wurden, zu einem gemeinsamen potentiellen Fehlerbereich zusammengefasst und als ein gemeinsamer potentieller Fehlerbereich der weiteren Verarbeitung zugrunde gelegt. Die nachfolgende intensive Überprüfung des jeweiligen potentiellen Fehlerbereiches bspw. mithilfe des maschinellen Mustererkennungsverfahrens bezieht sich somit auf dem gemeinsamen potentiellen Fehlerbereich, der aus mehreren einzelnen potentiellen Fehlerbereichen zusammengefasst wurde, wodurch insbesondere Fehlstellen, die sich über mehrere Teilbereiche erstrecken, als ein zusammenhängender Fehler identifiziert und klassifiziert werden können.

Dabei ist es nicht zwingend notwendig, dass die potentiellen Fehlerbereiche als Teilbereiche aneinandergrenzen. Denkbar ist es auch, dass auch jene potentiellen Fehlerbereiche als Teilbereiche zusammengefasst werden, die innerhalb einer entsprechenden Umgebung liegen und ggf. nicht aneinandergrenzen.

In einer ganz besonders vorteilhaften Ausführungsform wird für jeden Teilbereich als statistische Abweichung die Standardabweichung bezüglich der Höhenniveaus des den jeweiligen Teilbereich betreffenden Höhenprofils ermittelt, wobei dann in Abhängigkeit von der für den jeweiligen Teilbereich ermittelten Standardabweichung festgestellt wird, ob der jeweilige Teilbereich ein potentieller Fehlerbereich ist. Liegt die ermittelte Standardabweichung oberhalb eines festgelegten Grenzwertes, so wird von einem Vorhandensein einer Fehlstelle ausgegangen und der Teilbereich als potentieller Fehlerbereich identifiziert. Über den Grenzwert lässt sich dabei die Genauigkeit und Geschwindigkeit des Erkennungsverfahrens steuern. Wurde ein sehr niedriger Grenzwert gewählt, so werden in der Regel mehr Teilbereiche als potentielle Fehlerbereiche identifiziert, bei denen sich im Nachgang herausstellt, dass sie keine Fehlstellen enthalten, als wenn ein höherer Grenzwert gewählt würde. Somit lässt sich über den Grenzwert letztlich auch die Genauigkeit der Fehlstellenerkennung einstellen.

In einer weiteren vorteilhaften Ausführungsform wird in Abhängigkeit von den Höhenniveaus des Höhenprofils innerhalb des jeweiligen potentiellen Fehlerbereiches ein sogenannter Höhenniveau-Schwerpunkt ermittelt, der in etwa die rechnerische Mitte eines zu identifizierenden Fehlers darstellt. Dieser Höhenniveau-Schwerpunkt lässt sich dabei aus den einzelnen Werten des Höhenprofils, welche das Höhenniveau darstellen, ableiten und lässt sich so auch ähnlich wie die statistische Abweichung rechnerisch schnell ermitteln. In einem vorgegeben Umfeld um den ermittelten Höhenniveau-Schwerpunkt herum werden dann die Eigenschaftsdaten zur Erkennung von Fehlstellen herangezogen, so dass die Untersuchung der Eigenschaftsdaten auf diejenigen Daten beschränkt bleibt, die in dem Umfeld des betreffenden Schwerpunktes liegen und somit mit sehr hoher Wahrscheinlichkeit Bestandteil des Fehlers sind. So lassen sich um den ermittelten Höhenniveau-Schwerpunkt herum entsprechende Fehlermuster mittels eines durchzuführenden maschinellen Mustererkennungsverfahrens ermitteln, bspw. basierend auf dem Höhenniveau.

In einer weiteren sehr vorteilhaften Ausführungsform wird das Höhenprofil in Form eines Farbtiefenbildes ermittelt, bei dem ein Höhenniveau des Höhenprofils durch einen entsprechenden Helligkeits- oder Farbwert repräsentiert wird. Unterschiedliche Helligkeits- bzw. Farbwerte stellen dabei unterschiedliche Höhenniveaus dar, so dass sich allein aus der Helligkeits- bzw. Farbwertverteilung des Farbtiefenbildes das Höhenprofil erkennen lässt. Diese Helligkeits- bzw. Farbwerte dienen dabei als Repräsentationen der Höhenniveaus innerhalb des Höhenprofils und können so dem Verfahren als Repräsentanten der Höhenniveaus zugrunde gelegt werden.

Die Aufgabe wird im Übrigen auch mit der Fehlstellenerkennungsvorrichtung gemäß Anspruch 13 erfindungsgemäß gelöst, wobei die Vorrichtung eingerichtet ist zur Durchführung des vorstehend beschriebenen Verfahrens und eine Höhenprofilermittlungsvorrichtung zum Ermitteln des Höhenprofils und einer Auswerteeinheit zum Erkennen von Fehlstellen hat. Die Höhenprofilermittlungsvorrichtung hat dabei mindestens einen Sensor zum Abtasten der Fasermaterialoberfläche, der an einem Roboter befestigt oder befestigbar ist und somit relativ gegenüber der Fasermaterialoberfläche verfahrbar ist.

Erfindungsgemäß wird die Aufgabe auch mit der Faserlegeanlage gemäß Anspruch 14 gelöst, wobei die Faserlegeanlage zum Ablegen von Fasermaterial auf einem Werkzeug zur Herstellung eines Faserverbundbauteils eingerichtet ist. Die Faserlegeanlage weist einen Faserlegekopf auf, mit dem das dem Faserlegekopf zugeführten Fasermaterials in Form eines Quasiendlosfasermaterials auf einem Werkzeug abgelegt werden kann. Des Weiteren weist die Faserlegeanlage eine Fehlstellenerkennungsvorrichtung, wie vorstehend genannt, auf, um so entsprechende Fehlstellen erkennen zu können.

Dabei kann der Sensor der Höhenprofilermittlungsvorrichtung als eigenständiger Endeffektor an einem Roboter angeordnet sein, wobei nach dem Ablegen des Fasermaterials durch den Faserlegekopf dann das Bauteil mithilfe des Sensors gescannt und das Höhenprofil ermittelt wird. Denkbar ist aber auch, dass der Sensor der Höhenprofilermittlungsvorrichtung an dem Faserlegekopf angeordnet ist, um so während des Ablegens des Fasermaterials die Oberfläche zu scannen.

Die Erfindung wird anhand der beigefügten Figuren beispielhaft näher erläutert. Es zeigen:
- Figur 1: - Schematische Darstellung eines Höhenprofils;
- Figur 2: - Schematische Darstellung des Höhenprofils mit unterteilten Teilbereichen;
- Figur 3: - Schematische Darstellung eines Höhenprofils mit identifizierten potentiellen Fehlerbereichen;
- Figur 4: - Schematische Darstellung der Fehlermustererkennung innerhalb eines potentiellen Fehlerbereiches;
- Figur 5: - Schematische Darstellung zum Vorgehen zur Vermessung eines klassifizierten Fehlers;
- Figur 6: - Schematische Darstellung einer Anlage.

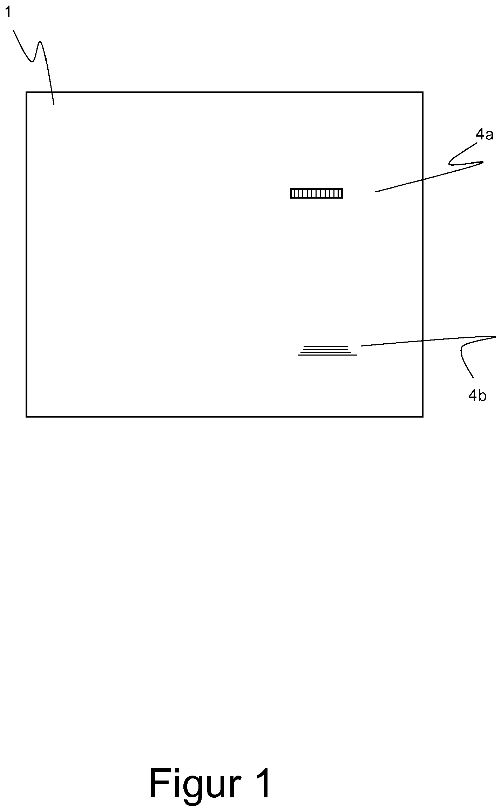

Figur 1 zeigt schematisch ein Höhenprofil 1 einer gescannten Fasermaterialoberfläche, wobei das Höhenprofil die einzelnen Höhenniveaus in Form eines Farbtiefenbildes oder Graustufenbildes repräsentiert. Hierzu weist das Höhenprofil 1 verschiedene Helligkeits- oder Farbwerte auf, die jeweils unterschiedliche Höhenniveaus charakterisieren. Zur vereinfachten Abbildung sind im Beispiel der Figur 1 die einzelnen, für die Erfindung relevanten und einen Fehler charakterisierenden Helligkeits-, Intensitäts- und/oder Farbwerte durch ein Muster gekennzeichnet, um so in den Abbildungen dem Farbtiefenbild gerecht zu werden.

Um das Höhenprofil zu erhalten, wird zunächst eine Oberfläche von abgelegten Fasermaterialien mithilfe einer Höhenprofilermittlungsvorrichtung gescannt. Eine solche Höhenprofilermittlungsvorrichtung kann dabei beispielsweise ein Laserlichtschnittsensor sein. Die aus diesem Scanprozess stammenden Daten werden sodann in ein Tiefenbild gewandelt, wodurch ein entsprechender Helligkeits- oder Farbwert in diesem Tiefenbild ein bestimmtes Höhenniveau charakterisiert. In den meisten Fällen ist der vom Laserlichtschnittsensor erzeugte Datensatz ein Messbild, welches die Höhenniveaus der betrachteten Oberfläche durch Helligkeitswerte repräsentiert.

In einer Vorverarbeitung wird nun das Höhenprofil zunächst durch eine Interpolation informationsarmer Bereiche bearbeitet, auf eine definierte Arbeitsbildgröße skaliert und die Bildmatrix entsprechend geglättet.

Ein so erzeugtes, interpoliertes, skaliertes und geglättetes Eingangs-Tiefenbild aus einem Laserlichtschnittsensor, wie es schematisch und beispielhaft in Figur 1 dargestellt ist, wird sodann dem erfindungsgemäßen Verfahren zugeführt.

Im Anschluss an diese Datenaufbereitung wird die eigentliche, schnelle Vorab-Analyse durchgeführt. Im Hinblick auf den zeitlichen Aspekt ist es vorteilhaft, wenn diese schnelle Vorab-Analyse auf einer sogenannten Graphics Processing Unit (GPU) durchgeführt wird, welche die parallele Abarbeitung einzelner Bereiche ermöglicht. Für eine konkrete Vorab-Analyse, d.h. die Ermittlung potentieller Fehlerbereiche, wird eine Gitterstruktur 2 auf das aufbereitete Messbild 1 gelegt, wodurch das Höhenprofil 1 bzw. das Messbild in eine Mehrzahl von Teilbereichen 3 unterteilt wird. Jeder Teilbereich 3 enthält somit einen Teil der Höhenniveaus des gesamten Höhenprofils, und zwar jene Höhenniveaus, die durch den Teilbereich entsprechend abgedeckt werden.

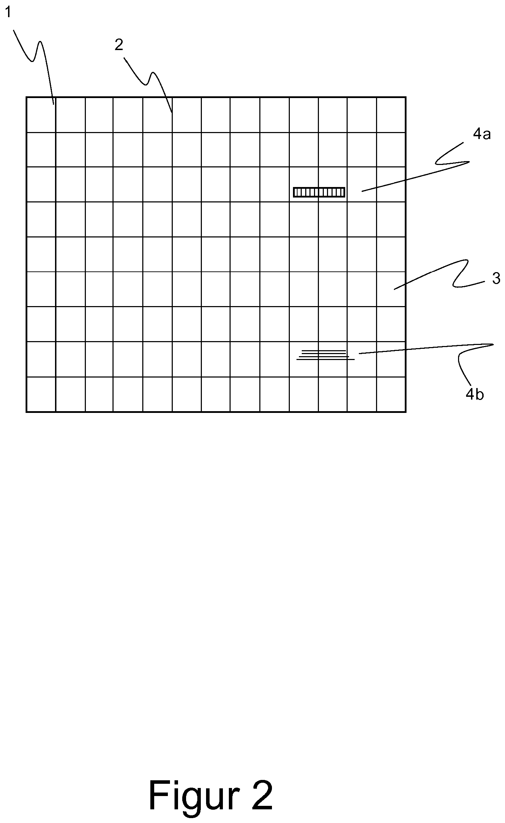

Eine solche Unterteilung in einzelne Teilbereiche 3 mithilfe einer Gitterstruktur 2 ist dabei in der Figur 2 ersichtlich.

Das Höhenprofil 1 weist in den Ausführungsbeispielen der Figur 1 und 2 zwei Bereiche auf, in denen sich eine Fehlstelle 4a, 4b befindet. Im nächsten Prozessschritt müssen nun diejenigen Teilbereiche 3 aufgefunden werden, in denen sich aller Wahrscheinlichkeit nach die Fehlstellen 4a und 4b in dem Höhenprofil 1 befinden.

So wird für jeden Teilbereich 3 eine statistische Abweichung der Höhenniveaus des jeweiligen Teilbereiches 3 betreffenden Höhenprofils mittels einer statistischen Auswertung ermittelt, so dass festgestellt werden kann, wie groß die statistische Abweichung der Höhenniveaus ist. Hierfür eignet sich beispielsweise die Standardabweichung als Fehlerkriterium. Ist die Standardabweichung oberhalb eines definierten Grenzwertes, so ist davon auszugehen, dass der betreffende Teilbereich 3 ein potentieller Fehlerbereich ist, in dem aller Wahrscheinlichkeit nach eine Fehlstelle zu finden ist.

Da die Intensitätswerte der Bildmatrix jeweils ein Höhenniveau repräsentieren, beschreibt die Standardabweichung somit die Änderung der Höhe innerhalb eines Teilbereiches. Daher eignet sich die Standardabweichung als Fehlerkriterium insbesondere bei Farbtiefenbildern oder Graustufenbildern, bei denen die Höhenniveaus aus Helligkeits-, Intensitäts- und/oder Farbwerten repräsentiert werden.

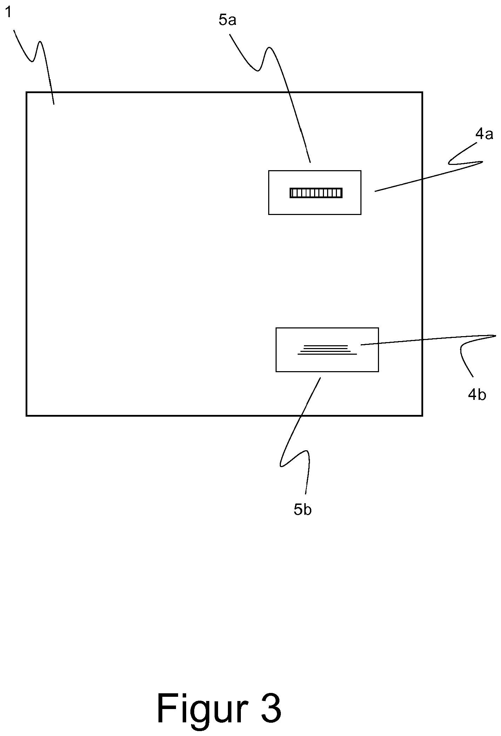

Nahebeieinanderliegende, potentielle Fehlerzellen werden dabei anschließend zu einem potentiellen Fehlerbereich zusammengefasst, so dass das Ergebnis dieser schnellen Vorab-Analyse auf zwei wesentliche potentielle Fehlerbereiche im Ausführungsbeispiel der Figuren reduziert werden kann. Dies ist exemplarisch in Figur 3 gezeigt, wo zwei potentielle Fehlerbereiche 5a und 5b identifiziert wurden, wobei der potentielle Fehlerbereich 5a den Fehler bzw. die Fehlstelle 4a beinhaltet, während der potentielle Fehlerbereich 5b die Fehlstelle 4b beinhaltet. Beide potentielle Fehlerbereiche sind dabei aus zwei nahebeieinanderliegenden Teilbereichen gebildet worden.

Diese beiden potentiellen Fehlerbereiche 5a und 5b werden nun einer weiteren, detaillierten und rechenintensiven Analyse unterzogen, wobei im weiteren Verlauf dieser Ausführungen nur auf den potentiellen Fehlerbereich 5b mit der Fehlstelle 4b Bezug genommen wird.

Für den Fall, dass keine potentiellen Fehlerbereiche detektiert worden sind, wird die Analyse an dieser Stelle abgebrochen und mit der Analyse des nachfolgend aufgezeichneten Messbildes begonnen.

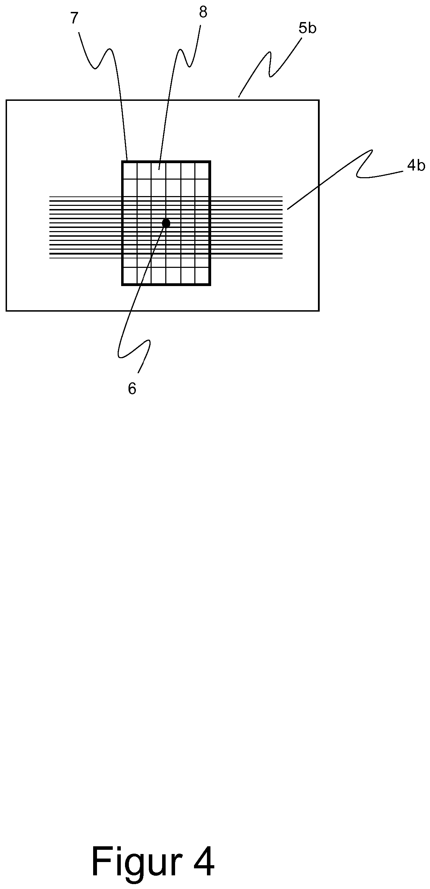

Wurden potentielle Fehlerbereiche erkannt, werden diese als Eingangsdaten für die zweite intensive Analyse verwendet. Hierbei lässt sich nicht nur identifizieren, ob eine Fehlstelle vorliegt, sondern auch welche Klassifizierung diese Fehlerstelle hat, d.h. ob es sich um einen Faltenfehler, Twists oder Fremdkörper handelt. Zur Klassifizierung der einzelnen Erscheinungsformen wird eine sogenannte Support Vector Machine (SVM) verwendet, die ein Verfahren zur maschinellen Mustererkennung (ein Verfahren des maschinellen Lernens) darstellt. Als Merkmale zur Beschreibung der unterschiedlichen Klassen (fehlerfrei, Falte, Twist, Fremdkörper) werden sogenannte Histogram of Oriented Gradients (HOG) Merkmale herangezogen, wobei diese Merkmale in einem definierten Umfeld um den Helligkeitsschwerpunkt eines Fehlerbereich-Teilbildes berechnet werden. Darüber hinaus werden die durchschnittliche Bildintensität und der durchschnittliche Gradientenwinkel und ggf. durchschnittliche Gradientenamplitude in einzelnen kleineren Zellen in der Umgebung des Helligkeitsschwerpunktes des Teilbildes bestimmt. Dieses exemplarische Vorgehen ist beispielhaft in Figur 4 dargestellt.

Innerhalb des durch den potentiellen Fehlerbereich 5b definierten Datenbereichs des Höhenprofils wird ein Helligkeitsschwerpunkt 6 ermittelt, der im Prinzip einen Höhenniveau-Schwerpunkt innerhalb des potentiellen Fehlerbereiches 5b darstellt. Um diesen Schwerpunkt 6 herum wird nun ein Bereich 7 abgegrenzt, der in einzelne Gitterzellen 8 unterteilt wird. Basierend auf der Ermittlung des Helligkeitsschwerpunktes 6 liegt dieser Rahmen 7 definiert innerhalb der Werte für den im Höhenprofil enthaltenen Fehler. Durch die Unterteilung in einzelne Gitterzellen 8 kann nun mithilfe der Histogram of Oriented Gradients Merkmale sowie der durchschnittlichen Bildintensität mit dem durchschnittlichen Gradientenwinkel und der durchschnittlichen Gradientenamplitude die Mustererkennung mithilfe eines maschinellen Mustererkennungsverfahrens bzw. eines maschinellen Lernverfahrens durchgeführt werden.

In Figur 4 wird durch dieses Verfahren beispielhaft eine Materialfalte 4b als Fehlstelle erkannt.

Das maschinelle Mustererkennungsverfahren bzw. maschinelle Lernverfahren bei kann dabei im Vorfeld durch entsprechende Trainingsdaten angelernt werden, um so insbesondere bei Verfahren bezüglich des maschinellen Lernens das Mustererkennungsverfahren bzw. maschinelle Lernverfahren entsprechend auf das Erkennen der relevanten Fehlermuster trainieren zu können. Zur Abschätzung der Klassifizierungsgüte werden dem System jeweils 10 verschiedene Beispiele jedes Fehlertyps angelernt. Bei einem Verfahren basierend auf einer Support Vector Machine kann hierzu eine Ausprägung C-SVC mit einem Radial Basis Function (RBF) Kernel verwendet werden. Anschließend wird eine zehnfache Kreuzvalidierung durchgeführt.

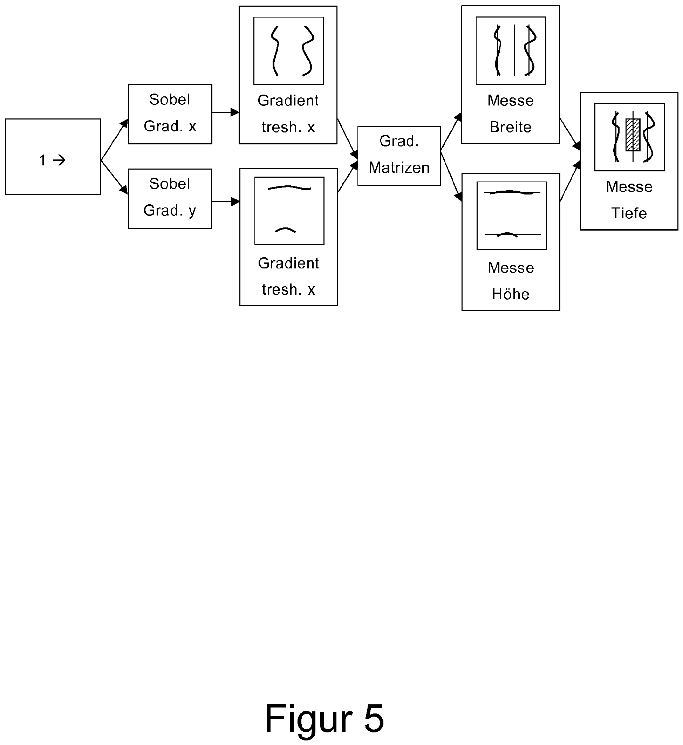

Schließlich kann, wie in Figur 5 beispielhaft gezeigt, der erkannte Fehler bzw. die erkannte Fehlstelle vermessen werden. Hierzu kann beispielsweise ein gradientenbasierter Ansatz unter Verwendung eines Sobel Filters verwendet werden.

Als Eingangsdaten erhält dieser Vermessungsschritt die Auswertungsstruktur des zuvor klassifizierten Fehler-Teilbildes. Anschließend wird ein richtungsabhängiger Sobel Filter, abwechselnd mit einer horizontalen und vertikalen Vorzugsrichtung verwendet. Die erzeugten Matrizen bilden die Länge der Gradienten als Helligkeitswerte ab. Zur Extraktion von Fehlerkanten wird nachfolgend ein vorab definierter Schwellwert auf das Graustufenbild angewendet. Es wird eine binäre Maske mit Werten größer oder gleich dem Schwellenwert und kleiner dem Schwellenwert erzeugt. Die vertikalen und horizontalen Fehlerkanten werden anschließend durch entsprechende Graden approximiert. Diese dienen als Grundlage für die Fehlervermessung.

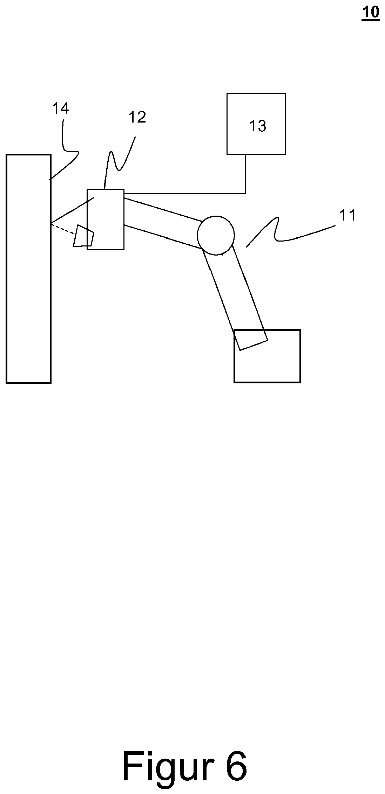

Figur 6 zeigt schließlich eine Fehlstellenerkennungsvorrichtung 10, die einen Roboter 11, einen als Endeffektor an dem Roboter 11 angeordneten Laserlichtschnittsensor 12 sowie eine Auswerteeinheit 13 hat. Mithilfe des Laserlichtschnittsensors 12 wird ein Laserlicht unter einem ersten definierten Winkel auf eine zu untersuchende Fasermaterialoberfläche 14 geworfen, das mithilfe einer Kamera unter einem definierten anderen Winkel aufgenommen wird. Der Roboter bewegt sich nun gegenüber der Fasermaterialoberfläche 14 und scannt somit die Oberfläche ab, so dass mithilfe des Laserlichtschnittsensors 12 ein entsprechendes Höhenprofil ermittelt werden kann. Dieses Höhenprofil wird dann an die Auswerteeinheit 13 zum Erkennen von Fehlstellen, wie oben genannt beschrieben, weitergeleitet.

### Bezugszeichenliste

- 1: - Höhenprofil
- 2: - Gitterstruktur
- 3: - Teilbereiche
- 4a, 4b: - Fehlstellen
- 5a, 5b: - potentielle Fehlerbereiche
- 6: - Schwerpunkt
- 7: - Betrachtungsrahmen
- 8: - Gitterzelle
- 10: - Fehlstellenerkennungsvorrichtung
- 11: - Roboter
- 12: - Laserlichtschnittsensor
- 13: - Auswerteeinheit
- 14: - Fasermaterialoberfläche

## Patentansprüche

1. Verfahren zum Erkennen von Fehlstellen (4a, 4b) von auf einem Werkzeug abgelegten Fasermaterial eines Faserverbundwerkstoffes zur Herstellung eines Faserverbundbauteils, mit den Schritten:
- Ermitteln eines Höhenprofils (1) von einer Fasermaterialoberfläche (14) eines auf dem Werkzeug abgelegten Fasermaterials mittels einer Höhenprofilermittlungsvorrichtung und Ablegen des Höhenprofils (1) als digitalen Datensatz in einem elektronischen Datenspeicher und
**dadurch gekennzeichnet, dass** mittels einer Auswerteeinheit (13)
- das Höhenprofil (1) in eine Mehrzahl von Teilbereichen (3), die entsprechenden Teilbereichen (3) auf der Fasermaterialoberfläche (14) des abgelegten Fasermaterials entsprechen, unterteilt wird,
- für jeden Teilbereich (3) eine statistische Abweichung der Höhenniveaus des den jeweiligen Teilbereich (3) betreffenden Höhenprofils (1) mittels einer statistischen Auswertung ermittelt und dann in Abhängigkeit von der ermittelten statistischen Abweichung der Höhenniveaus festgestellt wird, ob der betreffende Teilbereich (3) ein potentieller Fehlerbereich (5a, 5b) ist, bei dem anzunehmen ist, dass in den Teilbereich (3) wenigstens eine potentielle Fehlstelle (4a, 4b) des abgelegten Fasermaterials liegt, und, sofern zuvor wenigstens ein potentieller Fehlerbereich (5a, 5b) festgestellt wurde, und
- für jeden potentiellen Fehlerbereich (5a, 5b) jeweils Eigenschaftsdaten des abgelegten Fasermaterials aus einer hinterlegten Datenbasis ermittelt werden, wobei die Eigenschaftsdaten ein oder mehrere Eigenschaften des abgelegten Fasermaterials beschreiben, und dann eine Fehlstelle (4a, 4b) in den potentiellen Fehlerbeichen (5a, 5b) in Abhängigkeit von einer Auswertung der ermittelten Eigenschaftsdaten erkannt wird.

2. Verfahren nach Anspruch 1, **dadurch gekennzeichnet, dass** mittels der Auswerteinheit für jeden potentiellen Fehlerbereich (5a, 5b) basierend auf den Eigenschaftsdaten des betreffenden potentiellen Fehlerbereiches (5a, 5b) ein maschinelles Lernverfahren bzgl. der Eigenschaftsdaten innerhalb des betreffenden potentiellen Fehlerbereiches (5a, 5b) zum Erkennen von Fehlermustern durchgeführt und dann eine Fehlstelle (4a, 4b) in den betreffenden potentiellen Fehlerbereichen (5a, 5b) in Abhängigkeit von den erkannten Fehlermustern erkannt wird.

3. Verfahren nach Anspruch 1 oder 2, **dadurch gekennzeichnet, dass** mittels der Auswerteeinheit für jeden potentiellen Fehlerbereich (5a, 5b) basierend auf den Eigenschaftsdaten des betreffenden potentiellen Fehlerbereiches (5a, 5b) ein maschinelles Lernverfahren bezüglich der Eigenschaftsdaten innerhalb des betreffenden potentiellen Fehlerbereiches (5a, 5b) zum Erkennen von Fehlermustern durchgeführt und dann eine Fehlstelle in den betreffenden potentiellen Fehlerbereichen (5a, 5b) in Abhängigkeit von den erkannten Fehlermustern erkannt wird, wobei mithilfe des maschinellen Lernverfahrens basierend auf den erkannten Fehlermustern die erkannte Fehlstelle typisiert und ein Fehlertyp erkannt wird.

4. Verfahren nach Anspruch 2 oder 3, **dadurch gekennzeichnet, dass** vor Durchführung der Fehlermustererkennung mittels des maschinellen Lernverfahrens ein oder mehrere Fehlstellentypen mit Hilfe von vorgegebenen Trainingsdaten dem Lernverfahren angelernt werden.

5. Verfahren nach einem der vorhergehenden Ansprüche, **dadurch gekennzeichnet, dass** die Eigenschaftsdaten der Datenbasis die Höhenniveaus des Höhenprofils, eine Oberflächenspannung, ein Emissionsgrad, ein Transluzenzgrad, eine Druckverteilung, eine Temperaturverteilung, Rauheit, Helligkeit, Farben, Aushärtegrad, Dichte und/oder Kontraste sind.

6. Verfahren nach einem der vorhergehenden Ansprüche, **dadurch gekennzeichnet, dass** die Position des potentiellen Fehlerbereiches (5a, 5b), in dem eine Fehlstelle (4a, 4b) erkannt wurde, ermittelt und ausgegeben wird.

7. Verfahren nach einem der vorhergehenden Ansprüche, **dadurch gekennzeichnet, dass** das Höhenprofil (1) derart unterteilt wird, dass sich angrenzende Teilbereich (3) überlappen.

8. Verfahren nach einem der vorhergehenden Ansprüche, **dadurch gekennzeichnet, dass** benachbarte potentielle Fehlerbereiche (5a, 5b) zu einem gemeinsamen potentiellen Fehlerbereich (5a, 5b) zusammengefasst und als ein gemeinsamer potentieller Fehlerbereich (5a, 5b) der weiteren Verarbeitung zugrunde gelegt werden.

9. Verfahren nach einem der vorhergehenden Ansprüche, **dadurch gekennzeichnet, dass** für jeden Teilbereich (3) als statistische Abweichung die Standardabweichung bezüglich der Höhenniveaus des den jeweiligen Teilbereich (3) betreffenden Höhenprofils (1) ermittelt wird, wobei in Abhängigkeit von der für den jeweiligen Teilbereich (3) ermittelten Standardabweichung festgestellt wird, ob der jeweilige Teilbereich (3) ein potentieller Fehlerbereich (5a, 5b) ist.

10. Verfahren nach einem der vorhergehenden Ansprüche, **dadurch gekennzeichnet, dass** in Abhängigkeit von den Höhenniveaus des Höhenprofils (1) innerhalb des jeweiligen potentiellen Fehlerbereiches (5a, 5b) ein Höhenniveau-Schwerpunkt ermittelt wird, wobei in einem vorgegebenen Umfeld um den ermittelten Höhenniveau-Schwerpunkt herum die Höhenniveaus zur Erkennung der Fehlermuster mittels des durchzuführenden maschinellen Mustererkennungsverfahrens herangezogen werden.

11. Verfahren nach einem der vorhergehenden Ansprüche, **dadurch gekennzeichnet, dass** das Höhenprofil (1) in Form eines Farbtiefenbildes oder Graustufenbildes ermittelt wird, bei dem ein Höhenniveau des Höhenprofils (1) durch einen entsprechenden Helligkeits- oder Farbwerte repräsentiert wird.

12. Verfahren nach einem der vorhergehenden Ansprüche, **dadurch gekennzeichnet, dass** das Höhenprofil (1) mittels eines optischen Lichtprojektionsverfahrens durch die Höhenprofilermittlungsvorrichtung ermittelt wird, bei dem die Fasermaterialoberfläche mit Licht einer Lichtquelle aus einer ersten Richtung beleuchtet, das von der Fasermaterialoberfläche reflektierte Licht aus einer anderen, zweiten Richtung mit einer Kamera aufgenommen und das Höhenprofil (1) dann in Abhängigkeit von dem reflektierten Licht aus den aufgenommenen Bilddaten durch eine Bildauswerteeinheit berechnet wird.

13. Fehlstellenerkennungsvorrichtung (10) zum Erkennen von Fehlstellen (4a, 4b) von auf einem Werkzeug abgelegten Fasermaterial eines Faserverbundwerkstoffes zur Herstellung eines Faserverbundbauteils eingerichtet zur Durchführung des Verfahrens nach einem der vorhergehenden Ansprüche, wobei die Fehlstellenerkennungsvorrichtung (10) eine Höhenprofilermittlungsvorrichtung und eine Auswerteeinheit (13) zum Erkennen von Fehlstellen (4a, 4b) hat, wobei die Höhenprofilermittlungsvorrichtung einen Sensor zum Abtasten der Fasermaterialoberfläche (14) hat, der an einem Roboter (11) befestigt oder befestigbar ist.

14. Faserlegeanlage zum Ablegen von Fasermaterial auf einem Werkzeug zur Herstellung eines Faserverbundbauteils mit einem Faserablegekopf und einer Fehlstellenerkennungsvorrichtung (10) nach Anspruch 13, wobei der Sensor zum Abtasten der Fasermaterialoberfläche (14) an dem Faserablegekopf angeordnet ist.

## Claims

1. Method for detecting defects (4a, 4b) of fibre material of a fibre composite material placed on a tool for producing a fibre composite component, having the steps of:
- determining a height profile (1) of a fibre material surface (14) of a fibre material placed on the tool by means of a height profile determination apparatus and saving the height profile (1) as a digital dataset in an electronic data memory, and
**characterized in that,** by means of an evaluation unit (13),
- the height profile (1) is divided into a plurality of partial regions (3) which correspond to corresponding partial regions (3) on the fibre material surface (14) of the placed fibre material,
- a statistical deviation of the height levels of the height profile (1) relating to the respective partial region (3) is determined for each partial region (3) by means of a statistical evaluation and then it is established, in dependence on the determined statistical deviation of the height levels, whether the applicable partial region (3) is a potential defect region (5a, 5b) for which it should be assumed that at least one potential defect (4a, 4b) of the placed fibre material is located in the partial region (3) and, if previously at least one potential defect region (5a, 5b) was established,
- property data of the placed fibre material can be respectively determined for each potential defect region (5a, 5b) from a stored database, wherein the property data describe one or more properties of the placed fibre material, and then a defect (4a, 4b) is detected in the potential defect regions (5a, 5b) in dependence on an evaluation of the determined property data.

2. Method according to Claim 1, **characterized in that**, for each potential defect region (5a, 5b), a machine learning method is performed by means of the evaluation unit with respect to the property data within the applicable potential defect region (5a, 5b) on the basis of the property data of the applicable potential defect region (5a, 5b) for the purpose of detecting defect patterns and then a defect (4a, 4b) in the applicable potential defect regions (5a, 5b) is detected in dependence on the detected defect patterns.

3. Method according to Claim 1 or 2, **characterized in that**, for each potential defect region (5a, 5b), a machine learning method is performed by means of the evaluation unit with respect to the property data within the applicable potential defect region (5a, 5b) on the basis of the property data of the applicable potential defect region (5a, 5b) for the purpose of detecting defect patterns and then a defect in the applicable potential defect regions (5a, 5b) is detected in dependence on the detected defect patterns, wherein the detected defect is classified by type with the aid of the machine learning method on the basis of the detected defect patterns and a defect type is recognized.

4. Method according to Claim 2 or 3, **characterized in that**, before the defect pattern detection is carried out by means of the machine learning method, one or more defect types are taught to the learning method with the aid of specified training data.

5. Method according to any of the preceding claims, **characterized in that** the property data of the database are the height levels of the height profile, a surface stress, an emissivity, a degree of translucency, a pressure distribution, a temperature distribution, roughness, brightness, colours, a degree of curing, density and/or contrasts.

6. Method according to any of the preceding claims, **characterized in that** the position of the potential defect region (5a, 5b) in which a defect (4a, 4b) was detected is determined and output.

7. Method according to any of the preceding claims, **characterized in that** the height profile (1) is divided such that adjoining partial regions (3) overlap.

8. Method according to any of the preceding claims, **characterized in that** adjacent potential defect regions (5a, 5b) are combined into a common potential defect region (5a, 5b) and are used, as a common potential defect region (5a, 5b), as the basis for the further processing.

9. Method according to any of the preceding claims, **characterized in that** the standard deviation with respect to the height levels of the height profile (1) relating to the respective partial region (3) is determined as statistical deviation for each partial region (3), wherein it is established, in dependence on the standard deviation determined for the respective partial region (3), whether the respective partial region (3) is a potential defect region (5a, 5b).

10. Method according to any of the preceding claims, **characterized in that** a height level centre of gravity is determined in dependence on the height levels of the height profile (1) within the respective potential defect region (5a, 5b), wherein, in a specified vicinity around the determined height level centre of gravity, the height levels are used for the detection of the defect patterns by means of the machine pattern recognition method to be performed.

11. Method according to any of the preceding claims, **characterized in that** the height profile (1) is determined in the form of a colour depth image or greyscale image, in which a height level of the height profile (1) is represented by a corresponding brightness or colour value.

12. Method according to any of the preceding claims, **characterized in that** the height profile (1) is determined using the height profile determination apparatus by means of an optical light projection method, in which the fibre material surface is illuminated with light from a light source from a first direction, the light reflected by the fibre material surface is recorded using a camera from another, second direction, and the height profile (1) is then calculated using an image evaluation unit in dependence on the reflected light from the recorded image data.

13. Defect detection apparatus (10) for detecting defects (4a, 4b) of fibre material of a fibre composite material placed on a tool for producing a fibre composite component, configured to carry out the method according to any of the preceding claims, wherein the defect detection apparatus (10) comprises a height profile determination apparatus and an evaluation unit (13) for detecting defects (4a, 4b), wherein the height profile determination apparatus comprises a sensor for scanning the fibre material surface (14) that is attached or attachable to a robot (11).

14. Fibre placement installation for placing fibre material on a tool for producing a fibre composite component, comprising a fibre placement head and a defect detection apparatus (10) according to Claim 13, wherein the sensor for scanning the fibre material surface (14) is arranged at the fibre placement head.

## Revendications

1. Procédé de reconnaissance d'imperfections (4a, 4b) d'un matériau fibreux, déposé sur un outil, d'un matériau composite à fibres pour la fabrication d'une pièce en matériau composite à fibres, comprenant les étapes consistant à :
- déterminer un profil de hauteur (1) d'une surface (14) d'un matériau fibreux, déposé sur l'outil, au moyen d'un dispositif de détermination de profil de hauteur, et stocker le profil de hauteur (1) en tant que jeu de données numériques dans une mémoire de données électronique,
**caractérisé en ce qu'**au moyen d'une unité d'évaluation (13)
- le profil de hauteur (1) est subdivisé en une pluralité de zones partielles (3) qui correspondent à des zones partielles correspondantes (3) sur la surface (14) du matériau fibreux déposé,
- pour chaque zone partielle (3), on détermine un écart statistique des niveaux de hauteur du profil de hauteur (1), concernant la zone partielle (3) respective, au moyen d'une évaluation statistique et ensuite, en fonction de l'écart statistique déterminé des niveaux de hauteur, on détecte si la zone partielle (3) concernée est une zone de défaut potentiel (5a, 5b), pour laquelle on doit supposer qu'au moins une imperfection potentielle (4a, 4b) du matériau fibreux déposé se trouve dans la zone partielle (3), et, dans la mesure où au moins une zone de défaut potentiel (5a, 5b) a été détectée auparavant,
- pour chaque zone de défaut potentiel (5a, 5b), on détermine des données caractéristiques respectives du matériau fibreux déposé à partir d'une base de données stockée, les données caractéristiques décrivant une ou plusieurs caractéristiques du matériau fibreux déposé, puis on reconnaît une imperfection (4a, 4b) dans les zones de défaut potentiel (5a, 5b) en fonction d'une évaluation des données caractéristiques déterminées.

2. Procédé selon la revendication 1,
**caractérisé en ce qu'**au moyen de l'unité d'évaluation, pour chaque zone de défaut potentiel (5a, 5b), en se basant sur les données caractéristiques de la zone de défaut potentiel concernée (5a, 5b), on met en œuvre un procédé d'apprentissage automatique en ce qui concerne les données caractéristiques à l'intérieur de la zone de défaut potentiel concernée (5a, 5b) pour reconnaître des motifs de défaut, puis on reconnaît une imperfection (4a, 4b) dans les zones de défaut potentiel (5a, 5b) concernées en fonction des motifs de défaut reconnus.

3. Procédé selon la revendication 1 ou 2,
**caractérisé en ce que**, au moyen de l'unité d'évaluation, pour chaque zone de défaut potentiel (5a, 5b), en se basant sur les données caractéristiques de la zone de défaut potentiel (5a, 5b) concernée, on met en œuvre un procédé d'apprentissage automatique concernant les données caractéristiques à l'intérieur de la zone de défaut potentiel (5a, 5b) concernée pour reconnaître des motifs de défaut, puis on reconnaît une imperfection dans les zones de défaut potentiel (5a, 5b) concernées en fonction des motifs de défaut reconnus, on classe par types l'imperfection reconnue à l'aide du procédé d'apprentissage automatique en se basant sur les motifs de défaut reconnus, et on reconnaît un type de défaut.

4. Procédé selon la revendication 2 ou 3,
**caractérisé en ce que**, avant d'effectuer la reconnaissance du motif de défaut au moyen du procédé d'apprentissage automatique, on fait apprendre au procédé d'apprentissage un ou plusieurs types d'imperfection à l'aide de données d'entraînement prédéfinies.

5. Procédé selon l'une des revendications précédentes,
**caractérisé en ce que** les données caractéristiques de la base de données sont les niveaux de hauteur du profil de hauteur, une tension de surface, une émissivité, un degré de translucidité, une répartition de la pression, une répartition de la température, une rugosité, une luminosité, des couleurs, un degré de durcissement, une densité et/ou des contrastes.

6. Procédé selon l'une des revendications précédentes,
**caractérisé en ce que** l'on détermine et on émet la position de la zone de défaut potentiel (5a, 5b) dans laquelle une imperfection (4a, 4b) a été reconnue.

7. Procédé selon l'une des revendications précédentes,
**caractérisé en ce que** le profil de hauteur (1) est subdivisé de telle sorte que des zones partielles (3) adjacentes se chevauchent.

8. Procédé selon l'une des revendications précédentes,
**caractérisé en ce que** des zones de défaut potentiel (5a, 5b) voisines sont regroupées en une zone de défaut potentiel (5a, 5b) commune et sont utilisées comme zone de défaut potentiel (5a, 5b) commune pour la suite du traitement.

9. Procédé selon l'une des revendications précédentes,
**caractérisé en ce que**, pour chaque zone partielle (3), on détermine comme écart statistique l'écart type par rapport aux niveaux de hauteur du profil de hauteur (1) concernant la zone partielle (3) respective, et en fonction de l'écart type déterminé pour la zone partielle (3) respective, on détecte si la zone partielle (3) respective est une zone de défaut potentiel (5a, 5b).

10. Procédé selon l'une des revendications précédentes,
**caractérisé en ce que**, en fonction des niveaux de hauteur du profil de hauteur (1), à l'intérieur de la zone de défaut potentiel respective (5a, 5b), on détermine une priorité des niveaux de hauteur, et, dans un environnement prédéfini autour de la priorité déterminée des niveaux de hauteur, on utilise les niveaux de hauteur pour reconnaître les motifs de défaut au moyen du procédé automatique de reconnaissance de motifs à mettre en œuvre.

11. Procédé selon l'une des revendications précédentes,
**caractérisé en ce que** l'on détermine le profil de hauteur (1) sous la forme d'une image en profondeurs de couleur ou d'une image en niveaux de gris, dans laquelle un niveau de hauteur du profil de hauteur (1) est représenté par une valeur de luminosité ou de couleur correspondante.

12. Procédé selon l'une des revendications précédentes,
**caractérisé en ce que** le profil de hauteur (1) est déterminé par le dispositif de détermination du profil de hauteur au moyen d'un procédé optique de projection de lumière, dans lequel la surface du matériau fibreux est éclairée par la lumière d'une source lumineuse depuis une première direction, la lumière réfléchie par la surface du matériau fibreux est enregistrée par une caméra depuis une autre, deuxième direction, et le profil de hauteur (1) est ensuite calculé en fonction de la lumière réfléchie à partir des données d'image enregistrées par une unité d'évaluation d'image.

13. Dispositif de reconnaissance d'imperfections (10) pour reconnaître des imperfections (4a, 4b) d'un matériau fibreux, déposé sur un outil, d'un matériau composite à fibres pour la fabrication d'une pièce en matériau composite à fibres, conçu pour mettre en œuvre le procédé selon l'une des revendications précédentes, le dispositif de reconnaissance d'imperfections (10) comprenant un dispositif de détermination de profil de hauteur et une unité d'évaluation (13) pour reconnaître des imperfections (4a, 4b), le dispositif de détermination de profil de hauteur ayant un capteur destiné à balayer la surface de matériau fibreux (14), qui est fixé ou peut être fixé à un robot (11).

14. Installation de pose de fibres pour déposer un matériau fibreux sur un outil de fabrication d'une pièce en matériau composite à fibres, comprenant une tête de pose de fibres et un dispositif de reconnaissance d'imperfections (10) selon la revendication 13, le capteur destiné à balayer la surface de matériau fibreux (14) étant disposé sur la tête de pose de fibres.
